# EUROPEAN PATENT SPECIFICATION

(11) **EP 1 235 674 B1**
(45) Date of publication and mention of the grant of the patent: **13.04.2005**
(21) Application number: 00980621.7
(22) Date of filing: 21.11.2000
(51) Int. Cl.: B29C 45/00

(54) **A METHOD FOR OBTAINING A THERMOPLASTIC RESIN INJECTION-MOLDED PRODUCT HAVING A HIGH-QUALITY APPEARANCE**
VERFAHREN ZUM ERHALTEN EINES THERMOPLASTISCHEN SPRITZGEGOSSENEN PRODUKTS MIT HOCHQUALITÄTSAUSSEHEN
PROCEDE D'OBTENTION D'UN PRODUIT EN RESINE THERMOPLASTIQUE MOULE PAR INJECTION AYANT UNE APPARENCE DE HAUTE QUALITE

(30) Priority: 25.11.1999 JP 33450799
(43) Date of publication of application: 04.09.2002
(73) Proprietor: GENERAL ELECTRIC COMPANY, Schenectady, NY 12345 (US)
(72) Inventor: EBIZAWA, Atusushi Nihon G.E. Plastics K.K. Tec.Ctr, Maoka-shi, Tochigi Prefecture (JP); KAMEI, Ryota, Nihon G.E. Plastics K.K. Tec. Ctr., Maoka-shi, Tochigi Prefecture (JP)
(74) Representative: Szary, Anne Catherine, Dr.
(86) International application number: PCT/US2000/031966
(87) International publication number: WO 2001/038062

(56) References cited:
- EP-A- 0 909 626
- US-A- 4 340 551
- PATENT ABSTRACTS OF JAPAN vol. 12, no. 302 (M-732), 17 August 1988 (1988-08-17) -& JP 63 078720 A (SEKISUI CHEM CO LTD), 8 April 1988 (1988-04-08)
- PATENT ABSTRACTS OF JAPAN vol. 16, no. 569 (M-1343), 9 December 1992 (1992-12-09) -& JP 04 220309 A (SANKYO KASEI CO LTD), 11 August 1992 (1992-08-11)
- PATENT ABSTRACTS OF JAPAN vol. 1998, no. 9, 31 July 1998 (1998-07-31) -& JP 10 100216 A (NIPPON G II PLAST KK), 21 April 1998 (1998-04-21) cited in the application

## Description

### BACKGROUND OF THE INVENTION

### 1. Field of the Invention

The present invention concerns a method according to the preamble of claim 1 for obtaining a thermoplastic resin injection-molded product having a high-quality appearance.

Such a method is known from EP-A-0909626 and US-A-4340551.

### 2. Brief Description of the Related Art

The technique of setting the metal mold temperature and the molded resin temperature at a high level in injection molding of thermoplastic resin in order to obtain a high-quality appearance is widely known in the art. However, when the temperature of the metal mold and the molded thermoplastic temperature are set at a high level, this causes a drawback in that the molding cycle becomes longer than in the case of conventional injection-molding methods.

Using the molding method presented in Japanese Unexamined Patent Application Publication No. H10-100216, an application previously filed by the applicant of the present invention, one can obtain a molded product with a high-quality appearance. However, this has the drawback of a longer molding cycle time than in the case of widely used conventional injection molding methods.

EP-A-0909626 discloses a method for injection molding plastics, in which in order to avoid surface defects during the production of injection molded plastic products, the surface temperature of the metallic mold is raised above the injection transfer temperature of the plastic resin when the resin is non-crystalline or above the fusion point temperature if the resin is crystalline, using a temperature increase rate greater than 120°C/min. This temperature is maintained during the resin charging period followed by cooling at a decreasing rate greater than 120°C/min after the completion of charging. D1 also contemplates a temperature increase and decrease rate of 60°C/min. The temperature control is conducted using a feedback control with a detector for determining the surface temperature of the metallic mold and mounted close to the surface of the metallic mold.

US-A-4340551 discloses that in injection molding thermoplastic resin compositions containing reinforcing materials and/or fillers, high quality molded articles superior in surface gloss and exhibiting substantially no surface defect can be obtained, by employing a technical measure, in which only a superficial layer of the inner wall surface of the mold is selectively heated, by high-frequency induction heating, to a temperature above the heat distortion temperature of the thermoplastic resin composition employed prior to injection molding and cooling and solidifying the resin. The temperature increase rate is 80 °C/min.

JP-A-04 220 309 discloses a metal mold comprising a heating/cooling medium circulated in the mold and an electrical heating element embedded inside the mold. The mold is heated only by use of the electrical heating, whereas the heating/cooling medium is only used for cooling the mold.

### BRIEF SUMMARY OF THE INVENTION

The purpose of the present invention is to provide a molding method in which, in a molding method for obtaining an injection-molded product having the desired high-quality appearance that solves the problems connected with conventional general injection-molding methods for thermoplastic resins, the molding cycle time is not greatly prolonged compared to conventional general molding methods.

The problem to be solved by the present invention is that of advantageously providing a temperature gradient of 5-100°C/min., preferably 10-95°C/min., and particularly preferably 15-90°C/min. for heating a metal mold in a molding method in which, on injection of molten thermoplastic resin into the metal mold, the temperature of said metal mold is set to a level 0-100°C higher than the thermal deformation temperature of the injected thermoplastic resin.

Accordingly, the present invention provides a method as defined in the appended claim 1. In an embodiment of the present invention, one may adopt the method of circulating a heating/cooling medium in ducts inside the metal mold as a means for heating and optionally cooling of the metal mold with the aforementioned temperature gradient. Examples of such advantageous heating media include heated liquids having a high thermal capacity, such as superheated steam, heated water, and heated oil, and examples of cooling media include chilled water or chilled oil. An example of a device that can be used in achieving this objective is the device shown in Fig. 1, which is presented in Japanese Unexamined Patent Application Publication No. H10-100216, a previous application filed by the applicant of the present invention. An electrical heating element embedded inside the metal mold is also used to achieve more rapid heating.

Furthermore, in order to carry out rapid heating and optionally cooling by the method of circulating a heating/ cooling medium in the ducts inside the metal mold, the flow volume of the medium circulating in the heating/cooling ducts should preferably be 3 L/min. or more, preferably 5 L/min. or more, and particularly preferably 7 L/min. or more. Moreover, heating is carried out by the additional use of an electrical heating element embedded inside the metal mold. The reason for this is that the time delay caused by valve switching of the heating/cooling medium can be compensated for by means of an electrical heating element in which the timing of heating can be independently controlled.

In the following, the present invention is explained by means of an advantageous working example, but the scope of the present invention is by no means limited by this example.

This working example was carried out using the alloy Cycoloy C6600 (commercial name; manufactured by Nihon G.E. Plastics K.K.), obtained by melt kneading of the thermoplastic resins polycarbonate and ABS resin, with this being a so-called non-filler material not filled with fiber-reinforcement materials, etc., having a thermal deformation temperature of 90°C.

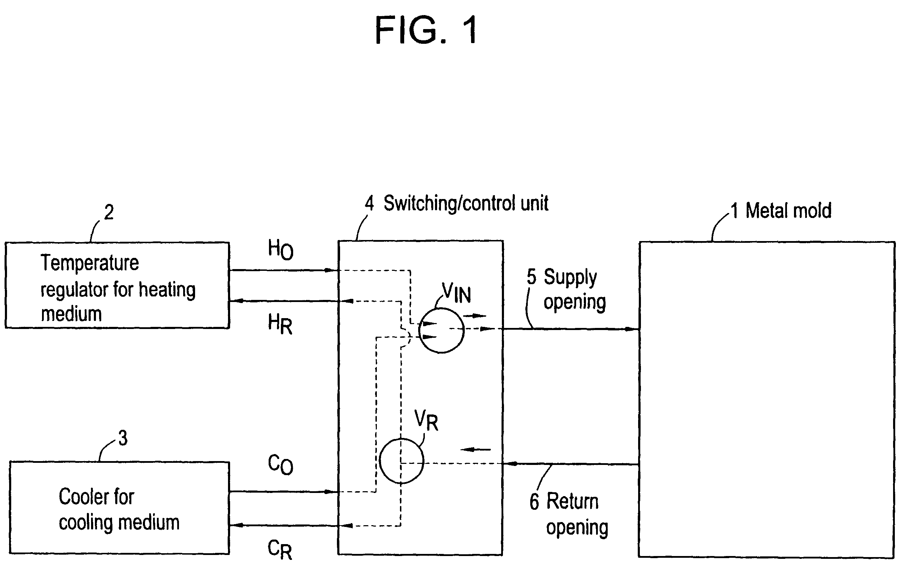

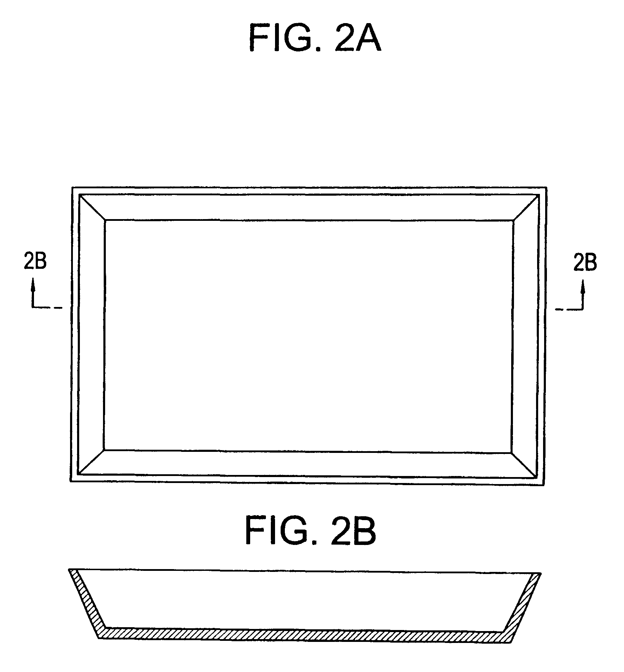

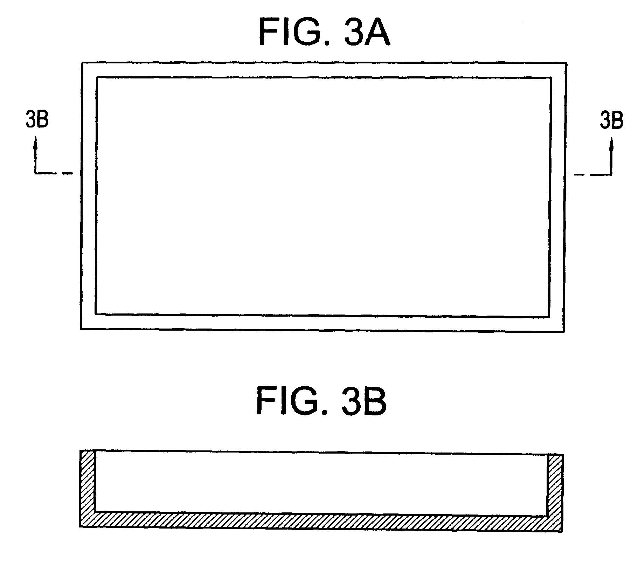

The molded product used in the working example was a thin tray-shaped material having a thickness of 1.2 mm, a height of 204.0 mm, a width of 280.3 mm, and an edge measuring 15.0 mm, with this material being shown in Fig. 2 as molded product A. Furthermore, molded product B, as shown in Fig. 3, was a box-shaped material measuring 1.5 mm in thickness, 80.0 mm in height, and 150.0 mm in width and having an edge height of 12.0 mm. The device used in the working example was the aforementioned device shown in Fig. 1 presented in Japanese Unexamined Patent Application Publication No. H10-100216.

In this device, the heating medium from the temperature regulator 2 and the cooling medium from the cooler 3, which are supplied to and return from the metal mold 1, shown schematically in the diagram, can be rapidly switched by means of an intake valve (Vin) and a return valve (Vr) mounted inside the switching/ control unit 4. Moreover, the heating/ cooling media are supplied to the metal mold from the supply opening 5 and are returned from the return opening 6. In addition, although this is not shown in the figure, an electrical heating element may be embedded in the metal mold, and this element is used in combination in order to further increase the temperature gradient during heating.

In order to confirm the effect seen in the working example, a conventional injection molding method not involving heating/cooling was taken as a reference example, and molding was carried out after making the improvements of the present invention, taking heating/cooling molding prior to improvement as a comparison example. In addition, molding was also carried out under the same molding conditions at the metal mold temperature conventionally used in injection molding, and comparisons were conducted.

The incorporation of temperature gradient control into the heating/cooling cycle in the present invention makes it possible to advantageously carry out molding. Table 1 shows a comparison in which molded product A, with a molding cycle time of 33 sec., and a molded product B, with a time of 45 sec., were manufactured by a conventional molding method in which a heating/cooling cycle was not used (comparison example), and a working example was carried out in which the temperature gradient was set in advance to 10-50°C/min. Moreover, the molding cycle times in the conventional heating/cooling molding method in which the temperature gradient was not controlled were at least 3 minutes and 3 minutes and 20 seconds respectively, as shown in the comparison example.

While the times in the comparison example, in which temperature gradient was not controlled, were both 3 minutes or more, the respective times in the working example, in which the temperature gradient was controlled as specified above, were 35 sec. and 50 sec., with both of these cycle times being close to those of the reference example. The appearance of the molded product was comparable to that achieved in conventional molding methods using a heating/cooling cycle.

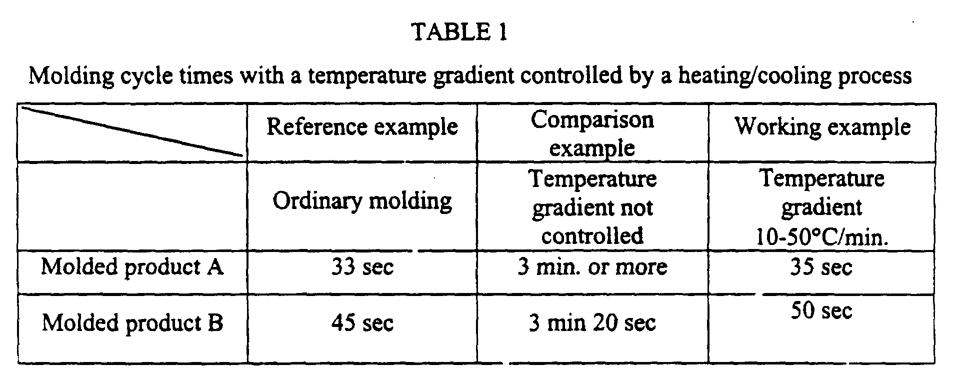

Moreover, as shown in Table 2, a molding cycle time of 2-3 minutes is required in the conventional molding method using the aforementioned heating/cooling cycle, in which the flow rate of the medium circulating in the cooling ducts is well below 1 L/min. In the heating/cooling molding method of the present invention, however, as shown in Fig. 2, in the working example in which the medium flow rate in the cooling duct was 30 L/ min. or more, the molding cycle time for molded product A was shortened to 35 sec., comparing favorably with the molding cycle time of 33 sec. for the conventional general injection molding method (reference example).

Although this value is virtually the same as the molding cycle time for the ordinary injection-molding process, which does not use heating/cooling control (reference example), a molded product having a high-quality appearance was obtained. Moreover, looking at the other molded product B, as shown in Fig. 3, the molding cycle time in the ordinary injection-molding method (reference example) was 45 sec., with a time of 2 min. 30 sec. for the conventional heating/cooling molding method, but molding according to the method of the present invention was carried out with a molding cycle time of 50 sec.

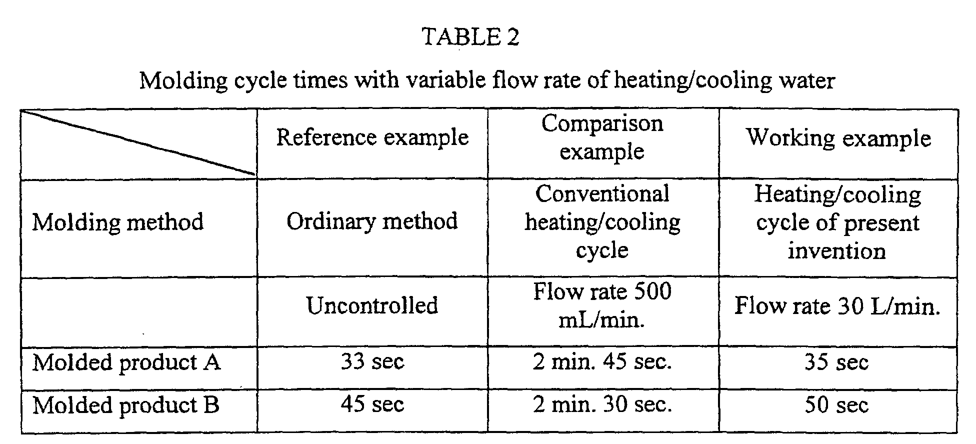

By means of the present invention, it is possible to achieve the objective of stable molding of products having an outstanding high-quality appearance by injection-molding methods for thermoplastic resin using conventional heating/cooling cycles, such as the method presented in Japanese Unexamined Patent Application Publication No. H10-100216, without unduly prolonging the conventional molding cycle. This effect can be applied not only to the thermoplastic resin used in the working example, but also to other thermoplastic resins. Specifically, by controlling the temperature gradient for heating (increasing temperature) and cooling to 10-50°C per minute according to the present invention, as clearly shown by the results in Table 1, the molding cycle can be almost identical to that in conventional injection-molding methods that do not involve heating/cooling.

### BRIEF DESCRIPTION OF THE DRAWINGS

Fig. 1 is a block diagram showing an example of the composition of a unit equipped with a heat source, a switching/control unit, and a metal mold suitable for the molding method of the present invention.
Fig. 2 is an explanatory diagram showing the composition of molded product A used in the working example of the present invention.
Fig. 3 is an explanatory diagram showing the composition of molded product B used in the working example of the present invention.
   1. Metal mold
   2. Temperature regulator for heating medium
   3. Cooler for cooling medium
   4. Switching/control unit
   5. Medium supply opening
   6. Medium return opening

## Claims

1. A method for obtaining a thermoplastic resin injection-molded product having a high-quality appearance, wherein on injection of a molten thermoplastic resin into a metal mold, the metal mold temperature is set to a level 0-100°C higher than the thermal deformation temperature of the injected thermoplastic resin, and heated with a temperature gradient of 5-100°C/min, **characterized in that** the heating of the metal mold is carried out by the combined use of a heating/cooling medium circulated in the metal mold and an electrical heating element embedded inside the metal mold.

2. A method for obtaining a thermoplastic resin injection-molded product having a high-quality appearance according to Claim 1, wherein the heating/ cooling medium is circulated in ducts inside the metal mold.

3. A method for obtaining a thermoplastic resin injected-molded product having a high-quality appearance according to Claim 1 or Claim 2, **characterized in that** the molding cycle time is shortened by controlling the flow rate of the heating/cooling medium circulated in the metal mold to 3 L/min. or above.

## Patentansprüche

1. Verfahren zum Erhalten eines spritzgegossenen Produktes aus thermoplastischem Harz mit hochqualitativem Aussehen, bei welchem man beim Einspritzen eines geschmolzenen thermoplastischen Harzes in eine Metallform die Temperatur der Metallform auf ein Niveau einstellt, das 0 bis 100°C höher ist als die thermische Verformungstemperatur des eingespritzten thermoplastischen Harzes, und mit einem Temperaturgradienten von 5 bis 100°C pro Minute erhitzt, **dadurch gekennzeichnet, dass** das Erhitzen der Metallform mittels des kombinierten Einsatzes eines Erwärmungs/Kühlmediums, welches in der Metallform zirkuliert, und eines elektrischen Erwärmungselements, welches im Inneren der Metallform eingebettet ist, durchgeführt wird.

2. Verfahren zum Erhalten eines spritzgegossenen Produktes aus thermoplastischem Harz, welches ein hochqualitatives Aussehen hat, gemäß Anspruch 1, **dadurch gekennzeichnet, dass** das Erwärmungs/Kühlmedium in Leitungen innerhalb der Metallform zirkuliert wird.

3. Verfahren zum Erhalten eines spritzgegossenen Produktes aus thermoplastischem Harz mit hochqualitativem Aussehen gemäß Anspruch 1 oder Anspruch 2 , **dadurch gekennzeichnet, dass** die Formzykluszeit verkürzt wird, in dem man die Fließgeschwindigkeit des Erwärmungs/Kühlmediums, das in der Metallform zirkuliert wird, auf 3 Liter/Minute oder darüber einstellt.

## Revendications

1. Procédé pour réaliser un article en résine thermoplastique moulée par injection ayant un aspect de grande qualité, dans lequel, au moment de l'injection d'une résine thermoplastique fondue dans un moule métallique, la température du moule métallique est établie à un niveau supérieur de 0 à 100°C à la température de déformation thermique de la résine thermoplastique injectée, et il est chauffé avec un gradient de température de 5-100°C/min, **caractérisé en ce que** le chauffage du moule métallique est réalisé grâce à l'utilisation combinée d'un agent de chauffage/refroidissement amené à circuler dans le moule métallique et d'un élément électrique chauffant noyé à l'intérieur du moule métallique.

2. Procédé pour réaliser un article en résine thermoplastique moulée par injection à aspect d'une grande qualité selon la revendication 1, dans lequel l'agent de chauffage/refroidissement est amené à circuler dans des conduits situés à l'intérieur du moule métallique.

3. Procédé pour réaliser un article en résine thermoplastique moulée par injection à aspect d'une grande qualité selon la revendication 1 ou la revendication 2, **caractérisé en ce que** la durée du cycle de moulage est raccourcie en réglant à 3 l/min ou plus le débit de l'agent de chauffage/refroidissement amené à circuler dans le moule métallique.
